# EUROPÄISCHE PATENTSCHRIFT

(11) **EP 1 441 357 B1**
(45) Veröffentlichungstag und Bekanntmachung des Hinweises auf die Patenterteilung: **07.11.2007**
(21) Anmeldenummer: 04001356.7
(22) Anmeldetag: 22.01.2004
(51) Int. Cl.: G11B 33/04

(54) **Vorrichtung zur Aufbewahrung mehrerer Schutzbehälter**
Device for storing a plurality of protective containers
Dispositif de stockage une pluralité de conteneurs de protection

(30) Priorität: 24.01.2003 DE 10302959
(43) Veröffentlichungstag der Anmeldung: 28.07.2004
(73) Patentinhaber: TIMPE, Rainer, 30982 Pattensen (DE)
(72) Erfinder: TIMPE, Rainer, 30982 Pattensen (DE)
(74) Vertreter: Scheffler, Jörg

(56) Entgegenhaltungen:
- EP-A- 1 045 395
- GB-A- 2 183 454
- US-A- 4 668 027

## Beschreibung

Die Erfindung betrifft eine Vorrichtung zur Aufbewahrung mehrerer Schutzbehälter auf einem Aufnahmeelement der Vorrichtung, wobei die Schutzbehälter zum Einführen flacher Informationsträger, insbesondere CDs oder DVDs, jeweils mit einer an einer Stirnseite angeordneten Einschuböffnung ausgestattet sind und bei welcher ein jeweiliger Schutzbehälter der Vorrichtung von einer Aufbewahrungsposition in eine Entnahmeposition verschwenkbar ist, in welcher ein jeweiliger Informationsträger aus dem Schutzbehälter entnehmbar oder in den Schutzbehälter einführbar ist.

Ein Schutzbehälter der eingangs genannten Art ist bereits aus der DE 101 17 159 A1 bekannt. Dieser Schutzbehälter weist eine Grundplatte und eine Deckelplatte auf, die über Seitenwände auf drei Seiten miteinander verbunden sind. Durch die Grundplatte und die Deckelplatte wird ein U-förmiger Aufnahmeraum für einen flachen Informationsträger, beispielsweise für eine CD oder eine DVD, gebildet, welcher über eine an einer Stirnseite angeordnete Einschuböffnung zugänglich ist. Zur Erleichterung des Einführens des Informationsträgers weist die Grundplatte auf der Seite der Einschuböffnung eine kreissegmentförmige Aussparung auf. In der Deckelplatte ist eine U-förmige Eingriffsöffnung für die Entnahme des Informationsträgers angeordnet, welche sich zu der Seite der Einschuböffnung hin öffnen und etwa im mittigen Bereich des Informationsträgers endet. Der Schutzbehälter kann einstückig oder mehrstückig ausgebildet sein und besteht beispielsweise aus glasklarem Kunststoff. Weiterhin besteht die Möglichkeit, ein oder mehrere Booklets und/oder Inlays in dem Schutzbehälter anzuordnen, welche ebenfalls über die Einschuböffnung in den Schutzeinführbar und auch entnehmbar sind.

Eine Vorrichtung der eingangs genannten Art ist bereits aus der US 4,668,027 (vergl. den Oberbegriff des Anspruchs 1) bekannt. Diese beschreibt bereits eine Vorrichtung zur Aufbewahrung mehrerer Schutzbehälter auf einem Aufnahmeelement der Vorrichtung, wobei die Schutzbehälter zum Einführen von Kassetten jeweils mit einer an einer Stirnseite angeordneten Einschuböffnung ausgestattet sind. Die Schutzbehälter sind von einer Aufbewahrungsposition in eine Entnahmeposition verschwenkbar, in welcher die Kassetten aus dem Schutzbehälter entnehmbar oder in den Schutzbehälter einführbar sind.

Weiterhin sind aus der GB 2 183 454 A und der EP 1 045 395 A2 Vorrichtungen zu Aufbewahrung mehrerer flacher Informationsträger bekannt.

Eine weitere Vorrichtung zur Aufnahme mehrerer Schutzbehälter ist in der Praxis durch offenkundige Vorbenutzung bekannt und zählt dadurch zum Stand der Technik. Bei dieser Vorrichtung sind mehrere Schutzbehälter nebeneinander auf einem, beispielsweise als CD-Rack ausgebildeten Aufnahmeelement angeordnet. Zur Entnahme eines Informationsträgers aus einem der Schutzbehälter wird dieser mit einer Hand von dem Aufnahmeelement heruntergenommen und anschließend wird der Informationsträger mit der anderen Hand aus dem Schutzbehälter herausgezogen. Im Anschluss hieran wird der nunmehr leere Schutzbehälter wieder auf dem Aufnahmeelement abgestellt oder anderweitig zwischengelagert.

Dabei hat es sich als nachteilig erwiesen, dass zur Entnahme des Informationsträgers aus dem Schutzbehälter beide Hände benötigt werden, was eine erhebliche Einschränkung des Bedienkomforts bedeutet. Der nach der Entnahme des Informationsträgers nunmehr leere Schutzbehälter muss anschließend wieder in die durch das Herunternehmen des Schutzbehälters entstandene Lücke zwischen den anderen Schutzbehältern eingeführt und auf dem Aufnahmeelement abgestellt werden. Dieses Einführen erfordert sehr viel Geschick. Wenn der entnommene Informationsträger wieder in den leeren Schutzbehälter eingeschoben werden soll, muss der leere Schutzbehälter, der sich neben den anderen Schutzbehältern auf dem Aufnahmeelement befindet, gesucht, gefunden und von dem Aufnahmeelement heruntergenommen werden, um dann anschließend wieder mit dem eingeführten Informationsträger auf dem Aufnahmeelement abgelegt zu werden. Der hiermit verbundene Zeit- und Handhabungsaufwand hat sich als sehr nachteilig erwiesen.

Der Erfindung liegt die Aufgabe zugrunde, eine verbesserte und bedienerfreundlichere Vorrichtung zur Aufbewahrung mehrerer Schutzbehälter zur Verfügung zu stellen.

Diese Aufgabe wird erfindungsgemäß mit einer Vorrichtung gemäß den Merkmalen des Anspruchs 1 gelöst. Die Unteransprüche 2 bis 8 betreffen besonders zweckmäßige Weiterbildungen der Erfindung.

Erfindungsgemäß ist also eine Vorrichtung vorgesehen, bei welcher die Schutzbehälter mit einer zweiten Stirnseite zumindest teilweise auf dem Aufnahmeelement aufliegen und das Aufnahmeelement in einem Randbereich einen Vorsprung aufweist, welcher derart in eine in der zweiten Stirnseite der Schutzbehälter angeordnete Aussparung eingreift, dass der jeweilige Schutzbehälter von der Aufbewahrungsposition in die Entnahmeposition verschwenkbar ist, wobei in der Aufbewahrungsposition und der Entnahmeposition der jeweilige Schutzbehälter von dem Aufnahmeelement abnehmbar ist und dass die Aussparung keilförmig ausgebildet ist und eine erste Anschlagfläche aufweist, welche in der Entnahmeposition an einer ersten Anschlagfläche des Vorsprungs anliegt und dass die Aussparung eine zweite Anschlagfläche aufweist, welche in der Aufbewahrungsposition an einer zweiten Anschlagfläche des Vorsprungs anliegt. Hierdurch wird eine Einhandbedienung bei der Entnahme des Informationsträgers ermöglicht und somit der Bedienkomfort erheblich gesteigert. Eine sichere und schnelle Handhabung der Schutzbehälter bzw. der Informationsträger ist gewährleistet, wobei der Handhabungsaufwand insgesamt erheblich reduziert wird Durch das Verschwenken des Schutzbehälters von der Aufbewahrungsposition in die Entnahmeposition wird die Zugänglichkeit der Einschuböffnung des Schutzbehälters wesentlich verbessert und dadurch aus die Entnahme des Informationsträgers vereinfacht. Auch in der Entnahmeposition verbleibt der Schutzbehälter am Aufnahmeelement. Die durch das Entnehmen des Schutzbehälters nach dem Stand der Technik entstehende Lücke zwischen den Schutzbehältern wird von zumindest einem Abschnitt des Schutzbehälters auch in der Entnahmeposition ausgefüllt. Das viel Geschick erfordernde Einführen des Schutzbehälters in diese Lücke entfällt somit. Nach der Entnahme des Informationsträgers kann der Schutzbehälter in der Entnahmeposition verbleiben oder in seine Aufbewahrungsposition auf dem Aufnahmeelement zurück geschwenkt werden. Durch das Verbleiben in der Entnahmeposition ist der Schutzbehälter als leerer Schutzbehälter gekennzeichnet und kann bei einem Wiedereinführen des Informationsträgers sofort als leer identifiziert werden. Dadurch, dass in der Aufbewahrungsposition der jeweilige Schutzbehälter von dem Aufnahmeelement abnehmbar ist, wird eine Möglichkeit geschaffen, einen Schutzbehälter mitsamt des darin angeordneten Informationsträgers von dem Aufnahmeelement zu trennen, um diesen auch unabhängig von der Vorrichtung, beispielsweise bei einem Transport des Informationsträgers, zu nutzen. Der Schutzbehälter wird hierzu beispielsweise angehoben und dadurch der Vorsprung von der Aussparung getrennt. Dadurch, dass in der Entnahmeposition der jeweiligen Schutzbehälter von dem Aufnahmeelement abnehmbar ist, muss ein in der Entnahmeposition angeordneter Schutzbehälter nicht erst in die Aufbewahrungsposition verschwenkt werden, um von dem Aufnahmeelement getrennt zu werden. Vorteilhaft ist weiterhin, dass die Aussparung keilförmig ausgebildet ist und zumindest eine Anschlagsfläche aufweist, welche in der Entnahmeposition an einer Anschlagsfläche des Vorsprungs anliegt. Durch die Anschlagflächen der Aussparung und des Vorsprungs wird die Schwenkbewegung des Schutzbehälters von der Aufbewahrungsposition in die Entnahmeposition begrenzt und die genaue Stellung des Schutzbehälters in der Entnahmeposition definiert.

Hierbei erweist es sich als besonders zweckmäßig, dass die Aussparung eine Eingangsöffnung in der zweiten Stirnseite der Schutzbehälter aufweist, welche auf eine Form des Vorsprungs abgestimmt ist, wobei die Abmessungen der Eingangsöffnung geringfügig größer als die Abmessungen des Vorsprungs ausgebildet sind. Durch diese Anpassung der Eingangsöffnung der Aussparung an die Form des Vorsprungs wird einerseits gewährleistet, dass der Schutzbehälter bei dem Verschwenken von der Aufbewahrungsposition in die Entnahmeposition sicher mit dem Aufnahmeelement verbunden ist und andererseits ein Abnehmen des Schutzbehälters von dem Aufnahmeelement ermöglicht wird.

Eine andere besonders erfolgversprechende Weiterbildung der vorliegenden Vorrichtung wird auch dadurch geschaffen, dass ein Schwerpunkt der Schutzbehälter gegenüber einem Schwenkpunkt der Schutzbehälter derart angeordnet ist, dass ein selbsttätiges Verschwenken der Schutzbehälter aus der Entnahmeposition oder aus der Aufbewahrungsposition ausgeschlossen ist. Durch diese Anordnung des Schwerpunktes kann ein nicht erwünschtes, beispielsweise schwerkraftbedingtes Verschwenken des Schutzbehälters, sowohl von der Aufbewahrungsposition in die Entnahmeposition als auch von der Entnahmeposition in die Aufbewahrungsposition verhindert werden.

Eine ebenfalls besonders vorteilhafte Abwandlung der Vorrichtung wird auch dadurch erreicht, dass das Verschwenken der Schutzbehälter in die Entnahmeposition oder in die Aufbewahrungsposition bei einer Verlagerung des Schwerpunktes über eine zwischen der Aufbewahrungsposition und der Entnahmeposition angeordnete Zwischenposition hinweg selbsttätig erfolgt. Die Schwenkbewegung des Schutzbehälters wird anfangs durch eine manuelle Betätigung ausgelöst und bis zum Erreichen bzw. Überschreiten einer Zwischenposition auch durch einen manuellen Eingriff unterstützt. Beim Erreichen bzw. beim Überschreiten dieser Zwischenposition kann die manuelle Unterstützung entfallen, da der Schutzbehälter schwerkraftbedingt in die betreffende Endposition fällt. Dabei wird der Funktionsablauf, also das Verschwenken der Schutzbehälter, durch eine dynamische Schwerpunktverschiebung unterstützt.

Als besonders zweckmäßig hat es sich erwiesen, dass die Anschlagfläche des Vorsprungs im Wesentlichen senkrecht zu dem Aufnahmeelement angeordnet ist. Hierdurch wird einerseits gewährleistet, dass das Aufsetzen des Schutzbehälters auf das Aufnahmeelement und damit verbunden das Einführen des Vorsprungs in die Eingangsöffnung der Aussparung ohne Verkanten möglich ist und andererseits wird durch die senkrechte Anordnung der Anschlagfläche ein Abrutschen des Schutzbehälters von dem Aufnahmeelement in der Entnahmeposition wirksam verhindert.

Dabei ist es besonders einfach, dass der Vorsprung einen rechteckigen Querschnitt aufweist und sich nahezu über die gesamte Breite des Aufnahmeelementes erstreckt. Hierdurch wird auf besonders einfache Weise ein Vorsprung zur Verfügung gestellt, welcher ein Abrutschen des Schutzbehälters in der Entnahmeposition von dem Aufnahmeelement verhindert und ein Einführen des Vorsprungs in die Eingangsöffnung der Aussparung ermöglicht. Der Vorsprung kann einstückig, beispielsweise als Leiste ausgebildet, in dem Aufnahmeelement eingelassen oder an der Stirnseite des Aufnahmeelementes fixiert sein.

Dabei erweist es sich als besonders praxisnah, dass die Aussparung als eine Durchbrechung ausgeführt ist. Dadurch können die Schutzbehälter auf dem Aufnahmeelement verschoben werden, ohne dass die Schutzbehälter von dem Aufnahmeelement getrennt werden müssen. Weiterhin ist es hierdurch möglich, Schutzbehälter mit unterschiedlicher Breite auf ein und demselben Aufnahmeelement abzulegen.

Eine andere besonders zweckmäßige Weiterbildung der vorliegenden Vorrichtung wird auch dadurch erreicht, dass das Aufnahmeelement eine Rückwand und/oder Seitenwände und/oder ein Deckelelement aufweist. Hierdurch wird ein Modul gebildet, welches die Vorrichtung zumindest teilweise umschließt und dadurch auch vor dem Eintritt von Schmutz und Staub schützt. Die Seitenwände begrenzen das Aufnahmeelement seitlich, stützen die auf dem Aufnahmeelement angeordneten Schutzbehälter seitlich ab und verhindern dadurch ein Kippen oder Umfallen der Schutzbehälter.

Die Erfindung lässt verschiedene Ausführungsformen zu. Zur Verdeutlichung ihres Grundprinzips ist eine davon in der Zeichnung dargestellt und wird nachfolgend beschrieben. Diese zeigt in
- Fig. 1: eine Vorrichtung zur Aufnahme mehrerer Schutzbehälter für flache Informationsträger in einer Prinzipskizze;
- Fig. 2: eine vergrößerte Darstellung des in der Aussparung des Schutzbehälters angeordneten Vorsprungs.

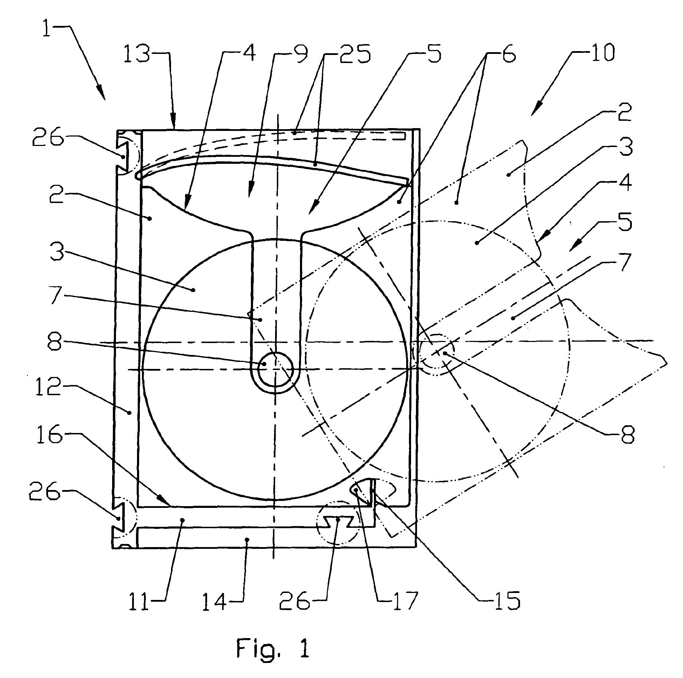

Figur 1 zeigt in einer Prinzipskizze eine Vorrichtung 1 zur Aufnahme mehrerer Schutzbehälter 2 für flache Informationsträger 3. Die Informationsträger 3 sind über eine in einer Stirnseite 4 angeordnete Einschuböffnung 5 in die Schutzbehälter 2 einführbar und aus den Schutzbehältern 2 entnehmbar. Eine Deckelplatte 6 der Schutzbehälter 2 weist eine U-förmige Eingriffsöffnung 7 auf. Diese Eingriffsöffnung 7 erleichtert das Eingreifen in die kreisförmige Durchbrechung 8 in der Mitte der Informationsträger 3 und dadurch das Entnehmen der Informationsträger 3 aus den Schutzbehältern 2. In den Schutzbehältern 2 sind neben den Informationsträgern 3 jeweils ein Inlay und/oder ein oder mehrere Booklets angeordnet.

Weiterhin zeigt die Figur 1 einen Schutzbehälter 2 in einer Aufbewahrungsposition 9, welcher mit durchgezogenen Linien dargestellt ist und einen mit gestrichelten Linien dargestellten Schutzbehälter 2 in einer Entnahmeposition 10. Der Schutzbehälter 2 in der Aufbewahrungsposition 9 liegt zumindest teilweise auf einem Aufnahmeelement 11 auf. Das Aufnahmeelement 11 weist eine Rückwand 12, ein Deckelelement 13 und Seitenwände 14 auf, von denen in der Zeichnung allerdings nur eine dargestellt ist. Weiterhin weist das Aufnahmeelement 11 in einem Randbereich einen Vorsprung 15 auf, welcher in eine in einer zweiten Stirnseite 16 des Schutzbehälters 2 angeordnete Aussparung 17 eingreift.

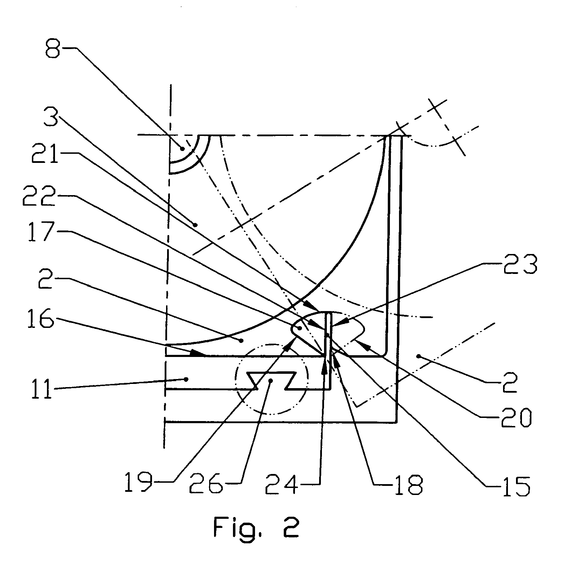

Ergänzend hierzu zeigt die Figur 2 eine vergrößerte Darstellung des in der Aussparung 17 des Schutzbehälters 2 angeordneten Vorsprungs 15. Die Aussparung 17 vergrößert sich von einer Eingangsöffnung 18 aus keilförmig und wird von einer ersten und einer zweiten Anschlagfläche 19, 20 und einer die Anschlagflächen 19, 20 verbindenden kreissegmentförmigen Verbindungsfläche 21 begrenzt. Der Übergangsbereich zwischen den Anschlagflächen 19, 20 zu der Stirnseite 16 des Schutzbehälters 2 ist abgerundet ausgebildet. Der Vorsprung 15 weist ebenfalls einer erste und eine zweite Anschlagflächen 22, 23 auf. In der Aufbewahrungsposition 9 liegt die zweite Anschlagfläche 20 der Aussparung an der zweiten Anschlagfläche 23 des Vorsprungs 15 an und die Verbindungsfläche 21 liegt auf dem Vorsprung 15 auf.

Um den Informationsträger 3 aus dem Schutzbehälter 2 zu entnehmen, wird dieser manuell von der Aufbewahrungsposition 9 in die Entnahmeposition 10 überführt. Hierbei schwenkt der Schutzbehälter 2 um einen Schwenkpunkt 24, welcher im Übergangsbereich zwischen der ersten Anschlagfläche 19 der Aussparung 17 und der Stirnseite 16 des Schutzbehälters 2, also im Bereich der Eingangsöffnung 18 der Aussparung 17 angeordnet ist. Der Schutzbehälter 2 vollzieht eine Schwenkbewegung bis die erste Anschlagfläche 19 der Aussparung 17 an der ersten Anschlagfläche 22 des Vorsprungs anliegt. Wenn die Anschlagfläche 19 an der Anschlagfläche 22 anliegt, ist die Entnahmeposition 10 des Schutzbehälters 2 erreicht. Der Informationsträger 3 kann nunmehr ohne Probleme aus dem Schutzbehälter 2 entnommen werden, da sowohl die Einschuböffnung 5 als auch die Eingriffsöffnung 7 des Schutzbehälters 2 eine verbesserte Zugänglichkeit aufweisen. Während des Verschwenkens des Schutzbehälters 2 verschiebt sich der Auflagepunkt des Schutzbehälters 2 bzw. der Aussparung 17 auf dem Vorsprung 15 und zwar entlang der kreissegmentförmigen Verbindungsfläche 21.

In der Aufbewahrungsposition 9 werden die Einschuböffnungen 5 der Schutzbehälter 2 von einer schwenkbaren Klappe 25 verschlossen, durch welche der Einfall von Staub in die Schutzbehälter 2 und damit eine Verschmutzung der Informationsträger 3 verhindert wird. Die schwenkbare Klappe 25 ist scharnierartig in der Rückwand 12 angeordnet und liegt in der mit durchgezogenen Linien dargestellten Stellung zumindest teilweise auf den Schutzbehältern 2 auf Während des Verschwenkens eines Schutzbehälters 2 wird die Klappe 25 in die gestrichelt dargestellte Stellung bewegt und senkt sich bei Erreichen der Entnahmeposition 10 des Schutzbehälters 2 wieder auf die Schutzbehälter 2, also in die mit durchgezogenen Linien dargestellte Stellung ab.

Weiterhin weist die Vorrichtung 1 mehrere schwalbenschwanzähnlich ausgebildete nutenförmige Aussparungen 26 auf, die auch als Durchbrechungen ausgebildet sein können. In diese nutenförmigen Aussparungen 26 können Verbindungselemente eingeführt werden, welche zwei Aufnahmeelemente 11 miteinander verbinden. Hierdurch kann die Vorrichtung 1 modular, sowohl horizontal als auch vertikal erweitert werden. Außerdem wird eine Wandmontage der gesamten Vorrichtung 1 ermöglicht. Die nutenförmigen Aussparungen 26 müssen jedoch nicht zwingend schwalbenschwanzähnlich ausgebildet sein. Die nutenförmigen Aussparungen 26 können beispielsweise auch halbrund ausgebildet sein oder eine andere geometrische Form aufweisen. Hierbei kann durch die Form der nutenförmigen Aussparungen 26 ein Hinterschnitt gebildet werden, durch welchen die Verbindungselemente formschlüssig in den nutenförmigen Aussparungen 26 fixiert werden.

## Patentansprüche

1. Vorrichtung (1) zur Aufbewahrung mehrerer Schutzbehälter (2) auf einem Aufnahmeelement (11) der Vorrichtung (1), wobei die Schutzbehälter (2) zum Einführen flacher Informationsträger (3), insbesondere CDs oder DVDs, jeweils mit einer an einer Stirnseite (4) angeordneten Einschuböffnung (5) ausgestattet sind und bei welcher ein jeweiliger Schutzbehälter (2) der Vorrichtung (1) von einer Aufbewahrungsposition (9) in eine Entnahmeposition (10) verschwenkbar ist, in welcher ein jeweiliger Informationsträger (3) aus dem Schutzbehälter (2) entnehmbar oder in den Schutzbehälter (2) einführbar ist, **dadurch gekennzeichnet, dass** die Schutzbehälter (2) mit einer zweiten Stirnseite (16) zumindest teilweise auf dem Aufnahmeelement (11) aufliegen und das Aufnahmeelement (11) in einem Randbereich einen Vorsprung (15) aufweist, welcher derart in eine in der zweiten Stirnseite (16) der Schutzbehälter (2) angeordnete Aussparung (17) eingreift, dass der jeweilige Schutzbehälter (2) von der Aufbewahrungsposition (9) in die Entnahmeposition (10) verschwenkbar ist, wobei in der Aufbewahrungsposition (9) und der Entnahmeposition (10) der jeweilige Schutzbehälter (2) von dem Aufnahmeelement (11) abnehmbar ist und dass die Aussparung (17) keilförmig ausgebildet ist und eine erste Anschlagfläche (19) aufweist, welche in der Entnahmeposition (10) an einer ersten Anschlagfläche (22) des Vorsprungs (15) anliegt und dass die Aussparung (17) eine zweite Anschlagfläche (20) aufweist, welche in der Aufbewahrungsposition (9) an einer zweiten Anschlagfläche (23) des Vorsprungs (15) anliegt.

2. Vorrichtung (1) nach Anspruch 1, **dadurch gekennzeichnet, dass** die Aussparung (17) eine Eingangsöffnung (18) in der zweiten Stirnseite (16) der Schutzbehälter (2) aufweist, welche auf eine Form des Vorsprungs (15) abgestimmt ist, wobei die Abmessungen der Eingangsöffnung (18) geringfügig größer als die Abmessungen des Vorsprungs (15) ausgebildet sind.

3. Vorrichtung (1) nach zumindest einem der vorhergehenden Ansprüche, **dadurch gekennzeichnet, dass** ein Schwerpunkt der Schutzbehälter (2) gegenüber einem Schwenkpunkt (24) der Schutzbehälter (2) derart angeordnet ist, dass ein selbsttätiges Verschwenken der Schutzbehälter (2) aus der Entnahmeposition (10) oder aus der Aufbewahrungsposition (9) ausgeschlossen ist.

4. Vorrichtung (1) nach zumindest einem der vorhergehenden Ansprüche, **dadurch gekennzeichnet, dass** der Schwerpunkt der Schutzbehälter (2) gegenüber dem Schwenkpunkt (24) der Schutzbehälter (2) derart angeordnet ist, dass das Verschwenken der Schutzbehälter (2) in die Entnahmeposition (10) oder in die Aufbewahrungsposition (9) bei einer Verlagerung des Schwerpunktes über eine zwischen der Aufbewahrungsposition (9) und der Entnahmeposition (10) angeordnete Zwischenposition hinweg selbsttätig erfolgt.

5. Vorrichtung (1) nach zumindest einem der vorhergehenden Ansprüche, **dadurch gekennzeichnet, dass** die Anschlagfläche (22) des Vorsprungs (15) im Wesentlichen senkrecht zu dem Aufnahmeelement (11) angeordnet ist.

6. Vorrichtung (1) nach zumindest einem der vorhergehenden Ansprüche, **dadurch gekennzeichnet, dass** der Vorsprung (15) einen rechteckigen Querschnitt aufweist und sich nahezu über die gesamte Breite des Aufnahmeelementes (11) erstreckt.

7. Vorrichtung (1) nach zumindest einem der vorhergehenden Ansprüche, **dadurch gekennzeichnet, dass** die Aussparung (17) als eine Durchbrechung ausgeführt ist.

8. Vorrichtung (1) nach zumindest einem der vorhergehenden Ansprüche, **dadurch gekennzeichnet, dass** das Aufnahmeelement (11) eine Rückwand (12) und/oder Seitenwände (14) und/oder ein Deckelelement (13) aufweist.

## Claims

1. Device (1) for storing a plurality of protective cases (2) on a holding element (11) of the device (1), wherein the protective cases (2) each have an insertion opening (5) on one end face (4) for inserting flat information carriers (3), in particular CDs or DVDs, and in which a respective protective case (2) of the device (1) can be pivoted from a storage position (9) into a removal position (10) in which a respective information carrier (3) can be removed from, or inserted into, the protective case (2), **characterised in that** the protective cases (2) rest with a second end face (16) at least partially on the holding element (11) and, in an edge region, the holding element (11) has a tab (15) which engages in a recess (17) arranged in the second end face (16) of the protective case (2) in such a way that the respective protective case (2) can be pivoted from the storage position (9) into the removal position (10), wherein the respective protective case (2) can be detached from the holding element (11) in the storage position (9) and the removal position (10), and that the recess (17) has a conical configuration and a first stop face (19) which, in the removal position (10), contacts a first stop face (22) of the tab (15) and that the recess (17) has a second stop face (20), which in the storage position (9) contacts a second stop face (23) of the tab (15).

2. Device (1) according to claim 1, **characterised in that** the recess (17) has an access opening (18) in the second end face (16) of the protective case (2), which is adapted to a shape of the tab (15), wherein the dimensions of the access opening (18) are slightly larger than the dimensions of the tab (15).

3. Device (1) according to at least one of the preceding claims, **characterised in that** a centre of mass of the protective cases (2) is arranged relative to a pivot point (24) of the protective cases (2) in such a way that automatic pivoting of the protective cases (2) from the removal position (10) or from the storage position (9) is excluded.

4. Device (1) according to at least one of the preceding claims, **characterised in that** the centre of mass of the protective cases (2) relative to the pivot point (24) of the protective cases (2) is arranged in such a way that the protective cases (2) automatically pivot into the removal position (10) or the storage position (9) once the centre of mass is shifted over an intermediate position between the storage position (9) and the removal position (10).

5. Device (1) according to at least one of the preceding claims, **characterised in that** the stop face (22) of the tab (15) is arranged substantially perpendicularly to the holding element (11).

6. Device (1) according to at least one of the preceding claims, **characterised in that** the tab (15) has a rectangular cross section and extends almost entirely across the width of the holding element (11).

7. Device (1) according to at least one of the preceding claims, **characterised in that** the recess (17) is a through opening.

8. Device (1) according to at least one of the preceding claims, **characterised in that** the holding element (11) has a rear wall (12) and/or side walls (14) and/or a cover member (13).

## Revendications

1. Dispositif (1) permettant de ranger plusieurs boîtiers protecteurs (2) sur un élément récepteur (11) du dispositif (1), moyennant quoi les boîtiers protecteurs (2) permettent d'introduire des supports d'information plats (3), en particulier des CD ou DVD, sont respectivement dotés d'une ouverture d'introduction (5) ménagée sur une face frontale (4), et dans lequel un boîtier protecteur (2) respectif du dispositif (1) peut être amené à pivoter pour passer d'une position de rangement (9) à une position d'extraction (10), dans lequel un support d'information (3) respectif peut être extrait des boîtiers protecteurs ou introduit dans le boîtier protecteur (2), **caractérisé en ce que** les boîtiers protecteurs (2) reposent avec une deuxième face frontale (16) au moins en partie sur l'élément récepteur (11), et l'élément récepteur (11) présente, dans une zone périphérique, une saillie (15) qui s'engrène de telle sorte dans un évidement (17) disposé sur la deuxième face frontale (16) du boîtier protecteur (2) que le boîtier protecteur (2) respectif peut être amené à pivoter pour parvenir de la position de rangement (9) à la position d'extraction (10), moyennant quoi, dans la position de rangement (9) et dans la position d'extraction (10), le boîtier protecteur (2) respectif peut être extrait de l'élément récepteur (11), et **en ce que** l'évidement (17) est configuré d'une manière cunéiforme, et présente une première surface de butée (19), qui, dans la position d'extraction (19), repose sur la première surface de butée (22) de la saillie (15), et **en ce que** l'évidement (17) présente une deuxième surface de butée (20) qui, dans la position de rangement (9), repose sur la deuxième surface de butée (23) de la saillie (15).

2. Dispositif (1) selon la revendication 1, **caractérisé en ce que** l'évidement (17) présente une ouverture d'entrée (18) dans la deuxième face frontale (16) du boîtier protecteur (2), qui est adapté à la forme de la saillie (15), moyennant quoi les dimensions de l'ouverture d'entrée (18) sont réalisées de manière à être légèrement supérieures aux dimensions de la saillie (15).

3. Dispositif (1) selon au moins l'une quelconque des revendications précédentes, **caractérisé en ce que** le centre de gravité des boîtiers protecteurs (2) par rapport au centre de gravité (24) des boîtiers protecteurs (2) est configuré de telle sorte qu'un pivotement automatique des boîtiers protecteurs (2) en partant de la position d'extraction (10) ou de la position de rangement (9) est exclu.

4. Dispositif (1) selon au moins l'une quelconque des revendications précédentes, **caractérisé en ce que** le centre de gravité des boîtiers protecteurs (2) par rapport au centre de gravité (24) des boîtiers protecteurs (2) est disposé de telle sorte que le pivotement des boîtiers protecteurs (2) pour parvenir dans la position d'extraction (10) ou dans la position de rangement (9), lorsque le centre de gravité passe au-delà d'une position intermédiaire située entre la position de rangement (9) et la position d'extraction (10), est réalisé automatiquement.

5. Dispositif (1) selon au moins l'une quelconque des revendications précédentes, **caractérisé en ce que** la surface de butée (22) de la saillie (15) est disposée de manière sensiblement perpendiculaire à l'élément récepteur (11).

6. Dispositif (1) selon au moins l'une quelconque des revendications précédentes, **caractérisé en ce que** la saillie (15) présente une section rectangulaire et s'étend quasiment sur la toute la largeur de l'élément récepteur (11).

7. Dispositif (1) selon au moins l'une quelconque des revendications précédentes, **caractérisé en ce que** l'évidement (17) est configuré sous la forme d'une perforation.

8. Dispositif (1) selon au moins l'une quelconque des revendications précédentes, **caractérisé en ce que** l'élément récepteur (11) présente une paroi arrière (12) et/ou des parois latérales (14) et/ou un élément de recouvrement (13).
